# EUROPÄISCHE PATENTANMELDUNG

(11) **EP 4 847 557 A1**
(43) Veröffentlichungstag der Anmeldung: **02.12.2026**
(21) Anmeldenummer: 26178106.6
(22) Anmeldetag: 12.05.2026
(51) Int. Cl.: C08K 3/26, B32B 1/08, C08K 3/04, C08K 3/06, C08K 11/00, F16L 11/00

(54) **NACHHALTIGE VULKANISIERTE KAUTSCHUKMISCHUNG FÜR SCHLÄUCHE**

(30) Priorität: 27.05.2025 DE 102025120600
(71) Anmelder: ContiTech Deutschland GmbH, 30175 Hannover (DE)
(72) Erfinder: Brühne, Klaus, 30175 Hannover (DE); Metz, Peter, 34497 Korbach (DE); Schmidt, Linda, 34497 Korbach (DE); Onken, Kristian, 34497 Korbach (DE); Wilke, Ronja, 34497 Korbach (DE)
(74) Vertreter: Preusser, Andrea

(57) **Zusammenfassung**

Die Erfindung betrifft eine vulkanisierte Kautschukmischung für Industrieschläuche umfassend 100 phr eines Synthesekautschuks mit ISCC-Zertifizierung oder einer Mischung solcher Synthesekautschuke, 50 bis 250 phr eines Füllstoffs oder einer Mischung von Füllstoffen, wobei die Füllstoffe recycelte Mikropartikel und/oder anorganische Mikropartikel natürlich vorkommenden Ursprungs sind, 10 bis 100 phr Weichmacheröle auf Basis von biologischen Ausgangsprodukten, und ein Kautschuk-Vernetzungssystem, wobei mindestens 75 Gew.-% der Kautschukmischung, bezogen auf die Gesamtmasse der vulkanisierten Kautschukmischung, auf wiedergewonnenen und/oder natürlich vorkommenden Rohstoffen basieren. Die Erfindung betrifft außerdem einen Schlauch, der mindestens eine Schicht aufweist, die aus dieser vulkanisierten Kautschukmischung ausgebildet wird.

## Beschreibung

Die Erfindung betrifft eine vulkanisierte Kautschukmischung für Schläuche und einen Schlauch mit mindestens einer Schicht aus einer solchen nachhaltigen Kautschukmischung.

Angesichts der zunehmenden Umweltbelastungen werden umweltfreundliche Alternativen zu herkömmlichen Gummimischungen gesucht. Durch die Verwendung von nachwachsenden Rohstoffen oder der Weiterverwertung von biologischen Abfällen kann der Einsatz von auf Kohlenwasserstoffchemie basierten Ausgangsprodukten gesenkt, bzw. eliminiert werden. Eine zentrale Aufgabe der heutigen Entwicklung ist die Reduktion des CO2-Fußabdrucks während gleichzeitig die gewohnten Qualität von Produkten erhalten bleiben soll.

Kautschukmischungen für Industrieschläuche müssen je nach Anwendung eine ausgewogene Kombination aus mechanischer Belastbarkeit, Witterungs- und Alterungsbeständigkeit sowie Medienresistenz bieten. Je nach Einsatzbereich müssen sie flexibel bleiben, auch bei niedrigen Temperaturen, und gleichzeitig abriebfest sowie druck- und vakuumbeständig sein. Die Auswahl der Kautschukbasis (z. B. NR, SBR, EPDM, NBR) und die gezielte Formulierung mit Füllstoffen, Weichmachern und Vernetzern bestimmen die Leistungsfähigkeit der Mischung. Zusätzlich sind Anforderungen wie Flammwidrigkeit, elektrische Leitfähigkeit oder Lebensmitteltauglichkeit zu berücksichtigen.

Daher war es Aufgabe der vorliegenden Erfindung eine vulkanisierte Kautschukmischung zu entwickeln, die einerseits eine umweltfreundliche Alternative darstellt und andererseits das technische Anforderungsprofil für Schläuche weiterhin gewährleistet. Dabei sollte der Anteil erdölbasierender und Umwelt-belastender Rohstoffe im Schlauch minimiert werden.

Diese Aufgabe wurde gelöst durch die vulkanisierte Kautschukmischung und den diese Kautschukmischung umfassenden Schlauch gemäß der unabhängigen Ansprüche.

Die erfindungsgemäße Mischung besteht zu einem großen Teil aus biologischen und recycelten Rohstoffen, was nicht nur die Umweltbelastung reduziert, sondern auch die Leistungsfähigkeit und Langlebigkeit der Endprodukte verbessert. Diese nachhaltige Kautschukmischung ist vielseitig einsetzbar und eignet sich besonders für Anwendungen, bei denen Flexibilität, Festigkeit und Beständigkeit gegen äußere Einflüsse erforderlich sind, wie beispielsweise in Wasserschläuchen und anderen industriellen Anwendungen.

Die vulkanisierte Kautschukmischung umfasst erfindungsgemäß 100 phr eines Synthesekautschuks mit ISCC-Zertifizierung oder einer Mischung solcher Synthesekautschuke. ISCC-zertifizierte Kautschuke sind Kautschukmaterialien, die gemäß den Standards der International Sustainability and Carbon Certification (ISCC) zertifiziert wurden. Diese Zertifizierung bestätigt, dass der Kautschuk aus nachhaltigen, rückverfolgbaren und verantwortungsvoll gewonnenen Rohstoffen stammt - sei es aus biobasierten Quellen, rezyklierten Materialien (z. B. Altreifen), oder fossilzirkulären Stoffströmen. Im Rahmen dieser Erfindung sind damit außerdem Kautschuke gemeint, die mindestens einen Nachhaltigkeits-Anteil von 50 Gew.-%, basierend auf dem Gewicht der Rohstoffe, aufweisen. Beispiele für solche Kautschuke sind EPDM, SBR, ECO und BR. Besonders bevorzugt ist ECO.

Die vulkanisierte Mischung umfasst außerdem 50 bis 250 phr eines Füllstoffs oder einer Mischung von Füllstoffen, wobei die Füllstoffe recycelte Mikropartikel und/oder anorganische Mikropartikel natürlich vorkommenden Ursprungs sind. Füllstoffe sind inerte oder funktionelle Zusatzstoffe, die in Kautschukmischungen eingearbeitet werden, um Eigenschaften wie Festigkeit, Abriebfestigkeit, Dichte, Verarbeitbarkeit oder Kostenstruktur zu optimieren. Erfindungsgemäße Mikropartikel sind größer als 0,99 µm und kleiner als 1000 µm. Vorzugsweise handelt es sich um eine Mischung von hellen und dunklen Füllstoffen. Der mit Abstand üblichste Füllstoff ist der erdölbasierte Ruß, auf den erfindungsgemäß vollständig verzichtet werden soll. Als dunkle Füllstoffe werden vorzugsweise recycelte Mikropartikel auf Kohlenstoffbasis, insbesondere aus Pyrolyseölen gewonnenen Pyrolyseruß, verwendet. Am meisten bevorzugt ist hierbei der REACH-spezifizierte recycelte Ruß. REACH-spezifizierter Ruß ist ein Industrieruß, der gemäß den Anforderungen der REACH-Verordnung registriert wurde und dessen Herstellung, Verwendung und Inverkehrbringen auf Basis umfassender toxikologischer und ökotoxikologischer Daten bewertet wurde.

In bevorzugten Ausführungsformen ist neben den dunklen Füllstoffen ein heller Füllstoff umfasst. Dieser ist vorzugsweise ein aus der Marmorverarbeitung gewonnenes Calciumcarbonat. Aus der Marmorverarbeitung gewonnenes Calciumcarbonat (CaCO₃) ist ein natürlich vorkommendes, mineralisches Füllstoffmaterial, das durch das Zerkleinern, Mahlen und Klassieren von Marmor - einem metamorph umgewandelten Kalkstein - hergestellt wird. Es handelt sich dabei um ein hochreines, kristallines Calciumcarbonat, das sich durch eine helle Farbe, hohe chemische Reinheit und gute Partikelform auszeichnet. Üblicherweise hat ein solcher Füllstoff einen Anteil von Calciumcarbonat von mehr als 98 Gew.-% (Rohstoffbasis) und eine Partikelgröße von weniger als 10 µm.

Die vulkanisierte Kautschukmischung umfasst außerdem 10 bis 100 phr Weichmacheröle auf Basis von biologischen Ausgangsprodukten. Besonders bevorzugt sind hierbei Weichmacher auf Pflanzenölbasis.

Die vulkanisierte Kautschukmischung umfasst außerdem ein Kautschuk-Vernetzungssystem. Darunter wird das bereits durch Erhitzen umgesetzte Vernetzungssystem verstanden. Ein Kautschukvernetzungssystem ist eine Kombination chemischer Komponenten, die in einer Kautschukmischung eingesetzt werden, um durch thermische Aktivierung eine dauerhafte, dreidimensionale Vernetzung der Polymerketten zu erzeugen. Diese Systeme bestehen typischerweise aus mindestens einem Vernetzer, wie z. B. elementarer Schwefel, und optional einem oder mehreren Vulkanisationsbeschleuniger. Die Auswahl der Komponenten richtet sich nach der Art des Kautschuks und den gewünschten Eigenschaften des Endprodukts, wie thermischer Stabilität, chemischer Beständigkeit oder Elastizität. Die Vernetzung erfolgt meist während eines Vulkanisationsprozesses, bei dem die Reaktionspartner unter Hitzeeinwirkung aktiviert werden und stabile chemische Bindungen zwischen den Polymerketten ausbilden. Im Rahmen der Erfindung können alle für die fachkundige Person bekannten und geeigneten Vernetzungssysteme eingesetzt werden.

Erfindungsgemäß basieren mindestens 75 Gew.-%, vorzugsweise mindestens 90 Gew.-%, am meisten bevorzugt über 99 Gew.-% der vulkanisierten Kautschukmischung, bezogen auf die Gesamtmasse der vulkanisierten Kautschukmischung, auf wiedergewonnenen und/oder natürlich vorkommenden Rohstoffen.

Ein weiterer Aspekt der Erfindung betrifft einen flexibler Schlauch, der mindestens eine Schicht der oben beschriebenen vulkanisierten Kautschukmischung aufweist. Der Schlauch kann ein- oder mehrlagig ausgebildet sein.

Vorzugsweise weist der Schlauch mindestens eine weitere Schicht auf. Diese weitere Schicht kann eine textile Festigkeitsträgerschicht sein. In bevorzugten Ausführungsformen kann die Festigkeitsträgerschicht aus textilen Fasern ausgebildet werden. Die Faser kann ausgewählt werden aus der Gruppe bestehend aus recycltem Thermoplast, insbesondere recyceltes Polyester (rPES), aus einem natürlichem Rohstoff, insbesondere Lyocell, Rayon auf Holzbasis oder Baumwolle, Wolle, Flachs und/oder Hanf, und aus Mischungen daraus.

In manchen Ausführungsformen ist die Festigkeitsträgerschicht die äußerste Schicht. Solche Schläuche werden als Umlageschläuche bezeichnet. Umlageschläuche sind flexible Schläuche, die mit einer äußeren Lage aus Festigkeitsträgern, der so genannten Umlage, versehen sind. Innerhalb der umhüllenden äußeren Lage können derartige Schläuche mehrere Lagen oder Schichten aus unterschiedlichen, Elastomeren, thermoplastischen Elastomeren oder Thermoplasten und Festigkeitsträgern aufweisen. Die äußere Lage aus Festigkeitsträgern kann als Geflecht, Gestrick, Gewirke, Gewebe oder dergleichen vorliegen. Vorzugsweise ist hierbei die Umlage aus wenigstens 20 Gew.-% Polyphenylensulfid (PPS), Polyoxadiazol (POD), Aramid (AR), Polyimid (PI), Polyetheretherketon (PEEK) , Polyethylen-2,6-naphthalat (PEN) , Polyphenylen (PPP) ,Polyphenylenoxid (PPO), Polyphenylensulfid (PPS) , Polyphenylenether (PPE) , Polybenzoxazole (PBO) , Kohlenstofffasern (CF), Metallfasern (MF) und Mischungen daraus, aufgebaut. Das stellt sicher, dass ein solcher Schlauch auf für Temperaturanwendungen oberhalb von 150°C geeignet bleibt.

In einem anderen Aspekt der Erfindung weist der Schlauch als äußerste Schicht eine erfindungsgemäße vulkanisierte Kautschukmischung auf. Vorzugsweise weist der Schlauch ausschließlich Schichten auf, die aus einer erfindungsgemäß vulkanisierten Kautschukmischung ausgebildet werden. Diese Schichten können auf der gleichen Mischung basieren oder auf verschiedenen Mischungen.

Der erfindungsgemäße Schlauch ist vorzugsweise ein Industrieschlauch. Ein Industrieschlauch ist ein vielseitig einsetzbarer Schlauchtyp, der in zahlreichen industriellen Anwendungen verwendet wird - etwa zur Förderung von Druckluft, Wasser, Öl, Lebensmitteln, Löse- und Kältemitteln (je nach Ausführung) oder zur Absaugung von Stäuben und Spänen. Je nach Einsatzgebiet zeichnen sich Industrieschläuche durch ihre Druck- und/oder Vakuumbeständigkeit sowie ihre mechanische Robustheit aus.

Der erfindungsgemäße Schlauch ist in anderen Ausführungsformen ein Chemieschlauch. Diese sind spezialisierte Industrieschläuche, der für den sicheren Transport von aggressiven, korrosiven oder gefährlichen Chemikalien entwickelt wurden. Diese finden Verwendung vor allem in der chemischen Industrie, in Laboren, in der Pharma- und Lebensmitteltechnik sowie in Tankfahrzeugen zum Einsatz. Chemieschläuche erfüllen strenge Normen (z. B. EN 12115) und sind elektrisch ableitfähig, um Explosionsrisiken zu minimieren.

### Beispiele:

Beispiel 1 wurde nach der in Tabelle 1 gezeigten, erfindungsgemäßen Rezeptur hergestellt und auf herkömmliche Art und Weise vulkanisiert. Beispiel 2 dient als Referenz und wurde aus herkömmlichen, erdölbasierten und nicht wiederverwendeten Rohstoffen hergestellt. Beide stellen eine Mischung für einen Schlauch dar. I5n Tabelle 2 sind die Ergebnisse der wesentlichen mechanischen Kenndaten gezeigt.

**Tabelle 1**

| Beispiel 1 | |
|---|---|
| | phr |
| EPDM, bis zu 70% biobasiert | 100 |
| CONTINUA 8000 SCM ECO (Kohlenstoff wiedergewonnen aus Ruß-haltigen Abfällen) | 160 |
| OMYALOOP 2 FC-AV ECO (Cacliumcarbonat gewonnen aus Industrieabfällen) | 50 |
| VIVASPES 10227 ECO (biobasiertes Öl) | 80 |
| Verarbeitungshilfsmittel | 21 |
| Vernetzungshilfsmittel | 8 |
| Schwefel | 1 |

**Tabelle 2**

| **Mechanische Kenngröße** | **Einheit** | **Referenz** | **Beispiel 1** |
|---|---|---|---|
| Dichte | g/cm³ | 1,238 | 1,239 |
| Shorehärte A/D | Shore A | 74 | 72 |
| Zugversuch S3A längs R-F (Mittelwert aus 3 Proben) | MPa | 9,8 | 8,9 |
| R-D (Mittelwert aus 3 Proben) | % | 402,2 | 313,7 |
| | | | |
| SPW100% (Mittelwert aus 3 Proben) | MPa | 4,0 | 3,5 |
| SPW200% (Mittelwert aus 3 Proben) | MPa | 7,1 | 6,5 |
| SPW300% (Mittelwert aus 3 Proben) | MPa | 8,9 | 8,7 |
| Weiterreißwiderstand DIN A I | N/mm | 8,4 | 6,0 |
| Weiterreißwiderstand DIN A q | N/mm | 11,1 | 7,1 |
| Abrieb n. DIN ISO 4649 | mm³ | 278 | 311 |
| DVR 25% DIN 72h/RT | % | 26 | 31,5 |
| DVR 25% DIN 24h/100°C | % | 49,5 | 69 |

## Patentansprüche

1. Vulkanisierte Kautschukmischung für Industrieschläuche umfassend:
100 phr eines Synthesekautschuks mit ISCC-Zertifizierung, eines CO₂-neutral produzierten Synthesekautschuks oder einer Mischung solcher Synthesekautschuke,
50 bis 250 phr eines Füllstoffs oder einer Mischung von Füllstoffen, wobei die Füllstoffe recycelte Mikropartikel und/oder anorganische Mikropartikel natürlich vorkommenden Ursprungs sind,
10 bis 100 phr Weichmacheröle auf Basis von biologischen Ausgangsprodukten, und ein Kautschuk-Vernetzungssystem,
wobei mindestens 75 Gew.-% der Kautschukmischung, bezogen auf die Gesamtmasse der vulkanisierten Kautschukmischung, auf wiedergewonnenen und/oder natürlich vorkommenden Rohstoffen basieren.

2. Vulkanisierte Kautschukmischung nach Anspruch 1, wobei der feste Füllstoff oder die Füllstoffmischung aus während der Marmorverarbeitung recyceltes Calciumcarbonat umfasst.

3. Vulkanisierte Kautschukmischung nach einem der vorhergehenden Ansprüche, wobei der feste Füllstoff oder die Füllstoffmischung recycelte Mikropartikel auf Kohlenstoffbasis, insbesondere aus Pyrolyseölen gewonnenen Pyrolyseruß, umfasst.

4. Vulkanisierte Kautschukmischung nach einem der vorhergehenden Ansprüche, wobei mindestens 99 Gew.-% der Kautschukmischung, bezogen auf die Gesamtmasse der vulkanisierten Kautschukmischung, auf wiedergewonnenen oder natürlich vorkommenden Rohstoffen basieren.

5. Vulkanisierte Kautschukmischung nach einem der vorhergehenden Ansprüche, wobei der Kautschuk ein SBR und/oder ein ECO ist.

6. Ein einlagiger oder mehrlagiger flexibler Schlauch aufweisend mindestens eine Lage der vulkanisierten Kautschukmischung nach einem der Ansprüche gemäß 1 bis 5.

7. Schlauch nach Anspruch 6, wobei der Schlauch ein mehrlagiger Schlauch ist und zusätzlich mindestens eine textile Festigkeitsträgerschicht aufweist, wobei die Festigkeitsträgerschicht aus textilen Fasern ausgebildet wird, die Faser ausgewählt wird aus der Liste bestehend aus recyceltem Thermoplast, insbesondere recyceltes Polyester (rPES), aus einem natürlichem Rohstoff, insbesondere Lyocell, Rayon auf Holzbasis oder Baumwolle, Wolle, Flachs und/oder Hanf, und aus Mischungen daraus.

8. Schlauch nach Anspruch 7, wobei die Festigkeitsträgerschicht die äußerste Schicht darstellt.

9. Schlauch nach einem der Ansprüche 6 oder 7, wobei der Schlauch mindestens eine innerste und eine äußerste Schicht ausgebildet aus der vulkanisierten Kautschukmischung aufweist.

10. Schlauch nach einem der Ansprüche 6 bis 9, wobei der Elastomerartikel ein Industrieschlauch, insbesondere ein Schlauch zur Druckluftversorgung, ein Schlauch für den Wasser- und/oder Öltransport, ein Schlauch für die Lebensmittelverarbeitung, ein Schlauch für die Absaugung von Stäuben oder Spänen, oder ein Wasserstoffschlauch, ist.
